# EUROPEAN PATENT APPLICATION

(11) **EP 4 624 263 A1**
(43) Date of publication of application: **01.10.2025**
(21) Application number: 25166731.7
(22) Date of filing: 27.03.2025
(51) Int. Cl.: B60R 11/04, H04N 23/20, H04N 23/55

(54) **INFRARED CAMERA AND OUTER WINDOW ASSEMBLY FOR A VEHICLE GLAZING**

(30) Priority: 29.03.2024 EP 24315114
(71) Applicant: LYNRED, 91120 Palaiseau (FR)
(72) Inventor: JOBERT, Gabriel, 38113 VEUREY-VOROIZE (FR)
(74) Representative: Cabinet Beaumont

(57) **Abstract**

The present disclosure relates to an infrared camera module (400) comprising:
- an infrared image sensor (420);
- an outer window (402), inclined with respect to an optical axis (401) of the infrared image sensor and held in a window mount (410) comprising a shape adapted to cooperate, in a removable manner, with a receiving part surrounding a hole passing through a glazing;
- an interface part (450) providing a mechanical link between the window mount (410) and the infrared image sensor (420).

## Description

### Technical field

The present disclosure generally relates to the field of infrared cameras.

The present disclosure particularly relates to an assembly comprising an infrared camera behind an outer window transparent to infrared radiation.

### Background art

In the field of infrared imaging, an infrared camera ("IR camera"), configured to capture thermal images of a scene, may be used. An IR camera generally comprises an arrangement of infrared-sensitive detectors forming an array of pixels. Each pixel of the pixel array converts a temperature measured at the pixel into a corresponding voltage signal, which is converted by a digital-to-analog converter (ADC) into a digital output signal. A microbolometer is an example of a pixel used for an uncooled infrared pixel array camera, adapted to capturing thermal images of an image scene.

In certain applications, an infrared camera is positioned behind a glass, such as a vehicle glazing, for example a car windscreen. Generally, the glass is not transparent to infrared radiation. Therefore, there is generally a need for a particular vehicle glazing provided with a hole drilled through its entire depth and fitted with a reception part, such as a mount, to which an element transparent to infrared radiation is attached. In the following disclosure, the transparent element may be referred to as an outer window. The outer window is positioned so that the IR camera can receive the infrared radiation through that outer window.

This vehicle glazing, and thus the outer window, may be inclined at a non-zero angle with respect to the vertical direction.

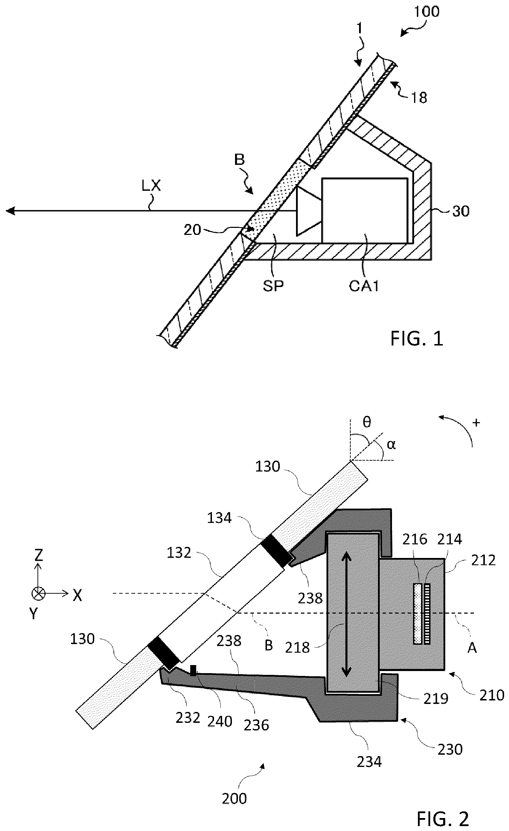

Figure 1 is a cross-section view of an example of an infrared camera positioned behind an inclined glass. Figure 1 is a figure of document WO2021/112144A1, which describes a camera unit 100 comprising a vehicle glass 1 and an infrared transmitting member 20 provided in an opening of the vehicle glass 1, and an infrared camera CA1 mounted behind the transmitting member 20. The infrared camera CA1 is mounted on a mounting bracket 30 which leans against the inside face of the vehicle glass 1.

The solution described in document WO2021/112144A1 has certain drawbacks including that of maintenance and induced cost of maintenance. Indeed, when the vehicle glass has to be replaced, the infrared transmitting member has to be replaced too, and, conversely, when the infrared transmitting member has to be replaced, the vehicle glass has to be replaced too.

In addition, there exists other technical drawbacks in prior art solution. For example, the presence of an inclined outer window, or inclined infrared transmitting member, may generate an undesired vignetting phenomenon on the image captured by the infrared camera, that is, a decrease in the brightness on the edges of the image, or, in other words, an increase in the opacity on the edges of the image. This vignetting phenomenon worsens as the distance between the outer window and the infrared camera increases.

### Summary of Invention

There is a need for an assembly comprising an infrared camera behind an outer window transparent to infrared radiation.

One embodiment addresses all or some of the above-mentioned drawbacks.

One embodiment provides an infrared camera module comprising:
- an infrared image sensor;
- an outer window, inclined with respect to an optical axis of the infrared image sensor and held in a window mount comprising a shape adapted to cooperate, in a removable manner, with a receiving part surrounding a hole passing through a glazing;
- an interface part providing a mechanical link between the window mount and the infrared image sensor.

In one embodiment, the infrared camera module further comprises at least one focal optical element, such as one or more lenses, positioned inside the interface part and centered with respect to the optical axis.

In one embodiment, the at least one focal optical element comprises at least one lens held in at least one lens mount, the at least one lens mount being coupled to the interface part, or being part of the interface part.

In one embodiment, the at least one lens is formed from a germanium crystal, zinc sulfide or zinc selenide, or from an amorphous infrared chalcogenide glass or alloy.

In one embodiment, the at least one lens is coated with an anti-reflective coating adapted to optimize optical transmission in the spectral sensitivity range of the infrared image sensor.

In one embodiment, the infrared image sensor comprises an array of vacuum micro-bolometers, sensitive, for example, to all or part of the wavelength range from 2.5 to 20 µm, and preferably from 7.5 to 14 µm.

In one embodiment, the outer window has an outer face which is substantially planar.

In one embodiment, the outer face of the outer window is coated with an anti-reflective coating.

In one embodiment, the outer window has a material which is transparent in the spectral sensitivity range of the infrared image sensor.

In one embodiment, the outer window has an inner face which is substantially planar and parallel to its outer face.

In one embodiment, the inner face of the outer window is coated with an anti-reflective coating, preferably different from an anti-reflective coating of the outer face.

In one embodiment, the window mount comprises first means for interfacing with the interface part, and second means for interfacing with the reception part of the glazing.

In one embodiment, the window mount has a first outer surface designed to slide into the through hole and a second outer surface designed to stop on a shoulder portion of the receiving part, the shoulder portion being dimensioned so that an outer face of the outer window substantially aligns with an outer face of the glazing, as an extension of the glazing.

In one embodiment, an outer face of the outer window is inclined with respect to the optical axis of the infrared image sensor by a tilt angle comprised between 20° and 70°, for example between 15° and 45° or between 45° and 65°.

In one embodiment, the infrared camera module further comprises a mechanical shutter positioned along the optical axis adapted to cut the optical path coming from the outer window to the infrared image sensor.

In one embodiment, the interface part includes a temperature sensor.

In one embodiment, the interface part includes a mirror designed to deflect the optical axis.

In one embodiment, the interface part includes an internal structure designed to protect the infrared image sensor from stray light.

In one embodiment, the interface part is covered with an absorbent coating in the spectral sensitivity range of the infrared image sensor, for example a black paint or a black anodized aluminum.

In one embodiment, the interface part is thermally conductive, at least in an area of the interface part exposed to stray light.

In one embodiment, the interface part is thermally coupled to a first heat dissipation system.

In one embodiment, the infrared image sensor is thermally coupled to a second heat dissipation system.

An embodiment provides a method of assembling an infrared camera module, the method comprising:
- assembling an infrared image sensor to an outer window, inclined with respect to an optical axis of the infrared image sensor, by means of an interface part, the outer window being held in a window mount comprising a shape adapted to cooperate, in a removable manner, with a receiving part surrounding a hole passing through a glazing, the interface part providing a mechanical connection between the window mount of the outer window and the infrared image sensor.

### Brief description of drawings

The foregoing features and advantages, as well as others, will be described in detail in the following description of specific embodiments given by way of illustration and not limitation with reference to the accompanying drawings, in which:
Figure 1 is a cross-section view of an example of an infrared camera positioned behind an inclined glass;
Figure 2 is a cross-section view of another example of an infrared camera positioned behind an inclined glass;
Figure 3A, figure 3B and figure 3C are front and cross-section views illustrating a glazing adapted to receive an infrared camera module according to an embodiment;
Figure 3D is a cross-section view illustrating an assembly of the glazing of figures 3A to 3C and an infrared camera module according to an embodiment;
Figure 4A and Figure 4B are cross-section views illustrating details of an infrared camera module according to an embodiment; and
Figure 4C illustrates an example of a lens in an infrared camera module according to an embodiment.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the optics, for example the lenses and their mount(s), and the infrared detector, for example an infrared detector in the form of an array of microbolometers or photodiodes, are not detailed, being known by those skilled in the art in the field of the invention.

Unless indicated otherwise, when reference is made to two elements connected together, this signifies a direct connection without any intermediate elements other than connectors or conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures, or to an infrared camera module as orientated during normal use.

When reference is made to the terms "in front of" or "upstream", reference is made to the direction of propagation of the light rays/radiation, that is, from the outer window to the infrared detector. When reference is made to the terms "behind" or "downstream", reference is made to the direction opposite to the direction of propagation of the light rays/radiation, that is, from the infrared detector to the outer window.

Unless specified otherwise, the expressions "around", "approximately", "substantially" and "in the order of" signify within 10 % or 10°, and preferably within 5 % or 5°.

Figure 2 is a cross-section view of another example of an infrared camera positioned behind an inclined glass.

Figure 2 is a figure of document FR3127633A1, which describes an infrared imaging device 200 comprising an infrared (IR) camera 210. The IR camera 210 comprises a housing 212 containing an image sensor 214 and a window 216 located in front of the image sensor 214, and a plurality of lenses 218 held in a lens barrel 219 assembled to the housing 212, the window 216 being positioned between the lens barrel 219 and the image sensor 214. The image sensor 214 and the lenses 218 define the optical axis A of the camera, shown in horizontal direction X. The infrared imaging device 200 comprises a wall 130 having an opening in which a porthole 132 is inserted with a porthole mount 134. The wall 130 and the porthole 132 are inclined by an angle α with respect to the optical axis A, or by an angle θ with respect to vertical direction Z. The IR imaging device 200 further comprises an interface element 230 positioned between the infrared camera 210 and the porthole mount 134, the interface element 230 enabling to accurately position the infrared camera 210 with respect the porthole 132. This interface element 230 enables controlling the distance between the infrared camera 210 with respect the porthole 132, and thus the vignetting phenomenon.

The interface element 230 comprises a first end 232 shaped to engage with the porthole mount 134, a second end 234 shaped to engage with the infrared camera 210 and a body 236 between the first and the second end.

The interface element 230 is an element separate from the wall 130 and from the infrared camera 210. Therefore, this enables to ease the replacing of the different elements of the wall and/or of the infrared imaging device, for example in the event of a maintenance, or when the interface element has to be changed, or when the wall has to be replaced, for example if it has been damaged during its use.

However, when the porthole 132 has to be replaced, the wall 130 has to be replaced too, and inversely, when the wall 130 has to be replaced, the porthole 132 has to be replaced too, inducing high costs of maintenance.

There thus exists a need for an infrared camera module capable of overcoming the above-mentioned drawbacks. In particular, there is a need for an infrared camera module that can be easily separated from a glazing, for example when the glazing needs to be replaced, and that ensures good positioning of optical elements of the infrared camera module.

The inventors provide an infrared camera module, also referred to as a thermal camera module, or to as a camera module, enabling to address this need.

The infrared camera module according to each embodiment comprises an assembly of an infrared image sensor, an infrared outer window, and an interface part. The assembly is intended to be removably attached to a reception part of a glazing.

The term "infrared" window refers to a window which is transparent to infrared radiation in the spectral range of operation of the infrared camera module. The term "outer" window refers to a window which is positioned in a part of the infrared camera module that interfaces with the exterior of that module. Generally, this part corresponds to one end of the module, which is an end facing the scene to be imaged.

The infrared camera module is designed to be interfaced with the glazing, in other words, to work in conjunction with the glazing. The glazing is preferably a vehicle glazing, for example a glazing of an automobile, railway, naval, aeronautical or astronautical vehicle. The vehicle glazing is, for example, the glazing of a driver's cabin, or more specifically a windscreen.

The glazing has a through hole and a reception part surrounding this through hole. This reception part provides a removable attachment interface for the infrared camera module.

The glazing has a tilt angle with respect to the horizontal direction, and the infrared outer window is designed to fill the through hole in the glazing and to follow the inclination of the glazing, acting as an extension of the glazing in the through hole.

The infrared camera module comprises at least the following elements:
- the infrared image sensor, which may comprise an infrared detector based on an array of vacuum micro-bolometers and an optical window, or vacuum-sealing optical window, in front of the infrared detector;
- the infrared outer window held in a window mount, the material of the outer window being adapted to the application, the infrared outer window may comprise a suitable outer coating; and
- the interface part providing a mechanical link between the window mount and the infrared image sensor.

The infrared detector may be sensitive in the thermal infrared range, typically a spectral range comprised between 2.5 and 20 µm, and for example in the LWIR range, that is, between 7.5 µm and 14 µm. The infrared detector may be adapted to operating in another spectral range in the infrared domain, typically in a spectral range comprised between 1 µm to 20 µm.

The infrared camera module preferably includes at least one focal optical element configured to form an image, positioned between the infrared detector and the infrared outer window. The at least one focal optical element may be part of a focal optical system, which may also be part of the infrared image sensor.

The infrared camera module may further comprise one or a plurality of the following elements:
- a mechanical shutter adapted to cut off the scene radiation and provide a black reference image;
- a temperature sensor;
- a structure designed to protect the infrared image sensor, for example the infrared detector, from stray light, particularly sunlight.

A first advantage of such an infrared camera module working in conjunction with a glazing is that maintenance costs are reduced when one or all elements of the infrared camera module need to be replaced, recalibrated or requalified, without having to replace the entire glazing. The same applies when the glazing needs to be replaced, without impacting the camera module.

A second advantage of such an infrared camera module working in conjunction with a glazing is that the production lines or chains of the infrared camera module and of the glazing are dissociated up till the final assembly with the glazing. The glazing generally constitutes a standard to which the camera module must conform.

The infrared camera module comprises the entire optical chain, up to the infrared outer window, and this facilitates the production, assembly, calibration and qualification of the camera module, since the entire chain can be completed before the final assembly with the glazing. In particular:
- the conditions, for example temperature, pressure, particles, for assembling the different elements of the camera module can be controlled;
- the sealing between the infrared outer window and the interface part can be controlled;
- the alignment tolerances of the optics with the outer window can be improved, allowing for example smaller outer window dimensions;
- the optics can be focused using only the outer window, without the glazing, for example, using a heat source, a test pattern and a collimator;
- the intrinsic calibration of the camera module can be carried out using only the outer window, that is, not the glazing, for example in climatic chambers, by placing the camera module in front of emissive reference surfaces, such as black bodies.

Examples of infrared camera modules will be described hereinafter. These examples are non-limiting and different variants will occur to those skilled in the art based on the indications of the present description.

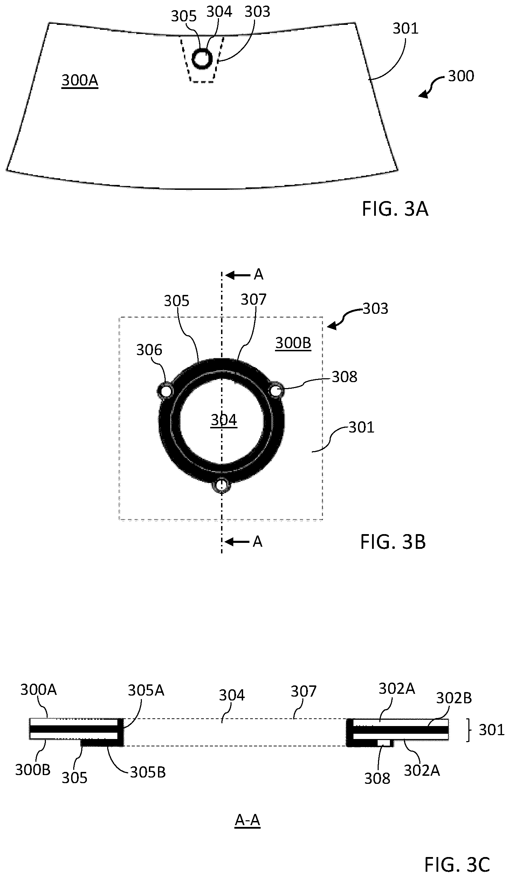

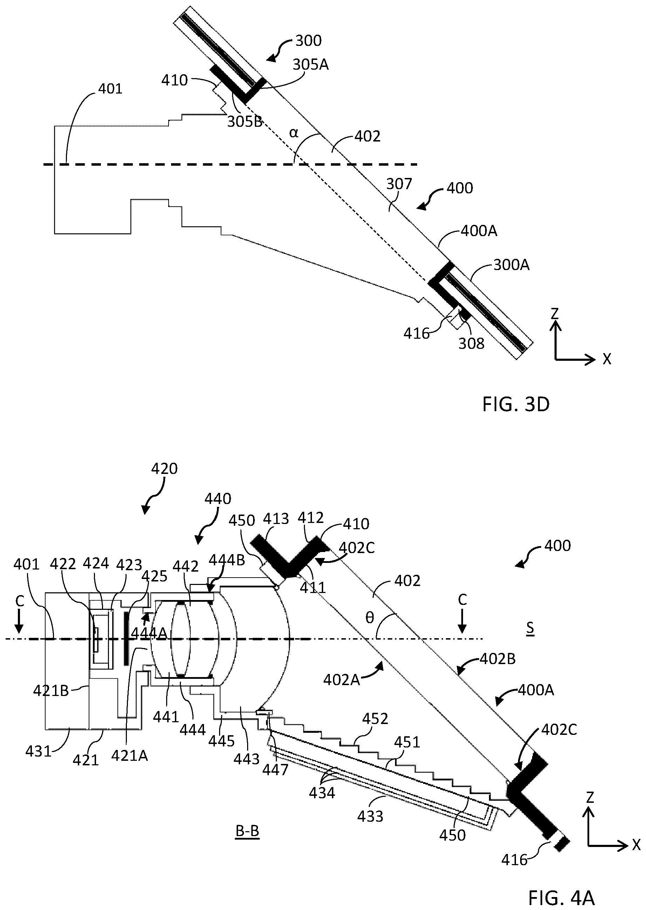

Figure 3A, figure 3B and figure 3C figure 3D are front and cross-section views illustrating a glazing 300 adapted to receive an infrared camera module according to an embodiment. Figure 3D is a cross-section view illustrating an assembly of the glazing 300 of figures 3A to 3D and an infrared camera module 400 according to an embodiment. Figure 3A shows the outer face 300A of the glazing 300. Figure 3A shows the inner face 300B of the glazing 300.

The glazing 300 has a thin thickness compared to its lateral dimensions. For example, the glazing 300 is a car windscreen. The total thickness of the glazing 300 is for example a few millimetres, typically around 5 mm.

The glazing 300 may be composed of a stacking 301 of layers, for example two glass layers 302A and a Poly Vinyl Butyral (PVB) layer 302B sandwiched between the two glass layers 302A.

A through hole 304 is drilled through the entire depth of the glazing 300. The hole 304 has for example a lateral dimension of a few centimetres. Typically, the hole 304 has the shape of a disc, having a diameter of a few centimetres, for example around 5 centimetres.

If the glazing 300 is a car windshield, the hole 304 may be typically positioned in a sensor area 303, for example behind a rear-view mirror, where a front camera and/or a rain sensor may be typically positioned.

As illustrated in Figure 3D, the glazing 300 has a tilt angle α with respect to the horizontal direction X which is typically comprised between 20° and 65°. In the case of a car windshield, this tilt angle is considered to be at least in vicinity of the sensor area 303.

A reception part 305 is inserted in the hole 304, preferably in a sealed manner with the stacking 301 inside the hole 304. The reception part 305 has a through hole 307 whose lateral dimensions are smaller than the lateral dimensions of the hole 304. The reception part 305 comprises a first portion 305A which engages inside the hole 304 against the stacking 301, and a second portion 305B which is connected to the first portion 305A and extends on the stacking 301 at the inner face 300B of the glazing 300. The second portion 305B may be referred to as a shoulder portion. The reception part 305 is typically a flange with the first portion 305A having a complementary shape with the hole 304. The reception part 305 comprises fixing means 308 configured to attach the reception part 305 to the inner face 300B of the glazing 300. The reception part 305 may comprise protrusions 306, such as lugs, through which the fixing means 308 extend. Those skilled in the art will be able to design the receiving part 305, to insert it into the hole 304, and to choose the appropriate fixing means 308.

As illustrated in Figure 3D, an infrared camera module 400, that will be described in greater detail below, can be removably and tightly, for example water-tightly, attached to the glazing 300, in particular to the reception part 305 of the glazing 300. The infrared camera module 400 has an outer face 400A which is substantially in line with the outer face 300A of the glazing 300.

As described in greater detail below, the infrared camera module 400 comprises, at its outer face 400A, an optical element 402 shaped and dimensioned to fit in the through hole 307 of the reception part 305 and a mechanical element 410 configured to support the optical element 402 and to assemble it to the reception part 305 of the glazing 300, in order to assemble the infrared camera module 400 to the glazing 300. In the following disclosure, the optical element 402 may be referred to as an outer window, and the mount 410 as a window mount.

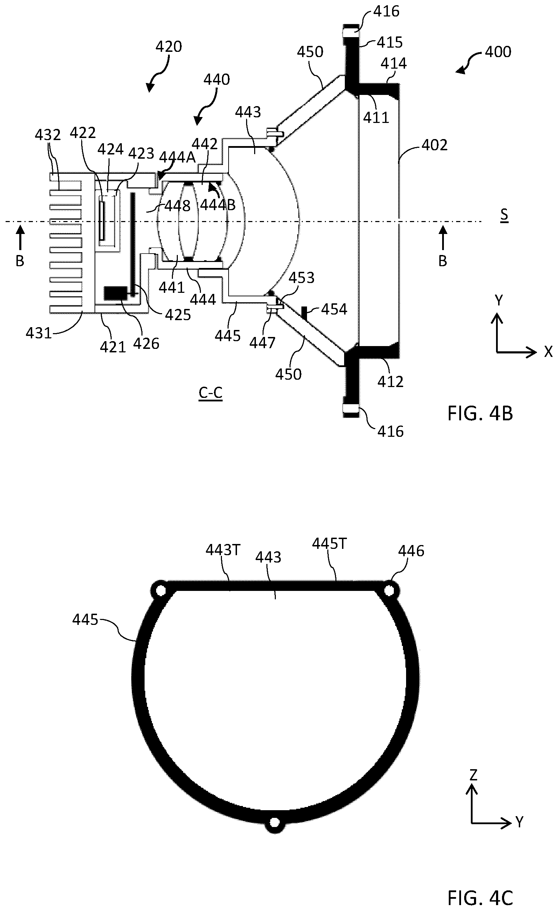

Figure 4A and Figure 4B are cross-section views illustrating details of an infrared camera module 400 according to an embodiment. Figure 4A is a B-B cross-section view, and Figure 4B is a C-C cross-section view. Figures 4A and 4B uses the same references as Figure 3D regarding the outer window 402 and the window mount 410.

Figure 4C illustrates an example of a lens in an infrared camera module according to an embodiment, such as the infrared camera module 400 of Figures 4A and 4B.

The infrared camera module 400 comprises an infrared (IR) image sensor 420 comprising an infrared detector 422 and an optical window 423 in front of the infrared detector 422 capable of transmitting IR radiation in the spectral range of use of the IR image sensor 420. The infrared image sensor 420 may be referred to as a sensor in the following disclosure.

The infrared image sensor 420 is adapted to capturing a thermal image of a scene S through the inclined outer window 402.

In an embodiment, the infrared detector 422 is a Focal Plane Array (FPA) detector, that is, a detector comprising an array of light-sensing pixels at the focal plane of a lens.

The light-sensing pixels are for example vacuum micro-bolometers, adapted to capturing thermal images of the scene S. For example, each of the micro-bolometers of the array comprises an absorber on a suspended thermo-resistive plate, typically based on amorphous silicon or doped vanadium oxide. The temperature of each micro-bolometer can be modified by radiative transfer with the scene elements, then the temperature is read by thermo-resistance measurement to extract a thermal radiation image of the scene, via an electronic readout circuit and an image processing unit (not illustrated).

The array has for example a Video Graphics Array (VGA) 4:3 format, that is 640x480 pixels, or a Quart-VGA 16:9 format, that is 320x180 pixels, but the array may have other formats with more or fewer pixels. The pixel pitch is for example around 12 µm, or around 8.5 µm, but may also have other pixel pitches.

The optical window 423 is configured to seal a vacuum chamber 424 such that the infrared detector 422 can be placed in a vacuum. The optical window 423 may be referred to as a vacuum sealing window.

The optical window 423 is for example made of Float-Zone silicon (FZ silicon) or of germanium. The optical window 423 has preferably an anti-reflective optical coating, advantageously with a wavelength filtration function.

The infrared image sensor 420 may be designed to be sensitive in the thermal infrared range, typically a spectral range comprised between 2.5 and 20 µm, and for example in the LWIR range, that is, between 7.5 µm and 14 µm.

The infrared detector 422 and the optical window 423 can be housed in a housing 421 which has an opening 421A in front of an optical system 440 described below. For example, the opening 421A may have substantially the dimensions of the optical window 423, or may be greater or smaller. Preferably, the opening 421A is great enough to avoid vignetting phenomenon.

Advantageously, the infrared image sensor 420 may be thermally coupled to a heat dissipation system 431. For example, the heat dissipation system 431 is a radiator comprising a plurality of fins 432. The function of the heat dissipation system 431 is to evacuate the heat created at least by the electronic readout circuit and the image processing unit. The heat dissipation system 431 is for example positioned against a side 421B of the housing 421 that faces the opening 421A.

The infrared detector 422 is placed at a focal plane of an optical system 440 comprising at least one lens capable of operating in the spectral range of use of the infrared image sensor 420. The optical system 440 may be referred to as a focal optical system.

The optical system 440 may be part of the infrared image sensor 420.

The infrared detector 422 and the at least one lens define an optical axis 401 (or optical path) of the infrared camera module 400, shown in the horizontal direction X.

The infrared detector 422 and the optical window 423 are positioned between the heat dissipation system 431 and the focal optical system 440 along the optical axis 401.

The optical system 440 is positioned between the optical window 423 and the outer window 402 along the optical axis 401, that is, upstream of the outer window 402.

The optical system 440 is configured to form a scene image in the sensor's spectral sensitivity range.

In the illustrated example of Figures 4A and 4B, the optical system 440 comprises three lenses 441, 442, 443. The lens 441 is positioned between the optical window 423 and the lens 442 along the optical axis 401. The lens 442 is positioned between the lens 441 and the lens 443 along the optical axis 401. The lens 443 is positioned upstream of the outer window 402, between the lens 442 and the outer window 402 along the optical axis 401. Those skilled in the art will be able to encompass other configurations and number of lenses, or other optical elements, more generally other focal optical systems.

Each lens may be formed, for example, by machining, molding, or lithography/engraving, and then polished, starting from material transparent in the sensor's spectral sensitivity range.

For example, each lens may be formed from a germanium crystal, or from zinc sulfide (ZnS), or from zinc selenide (ZnSe).

In a preferred embodiment, each lens is formed from amorphous infrared chalcogenide glasses/alloys such as :
- Ge₃₃As₁₂Se_{55;}
- Ge₃₀As₁₃Se₃₂Te₂₅;
- Ge₁₀As₄₀Se₅₀;
- Ge₂₈Sb₁₂Se₆₀;
- As₄₀Se₆₀.

Each lens may be advantageously coated with an anti-reflective coating adapted to optimize optical transmission in the sensor's spectral sensitivity range.

In a multi-lens optical system, the lenses are preferably assembled, using conventional opto-mechanical assembling techniques, for example threaded compartments or mounts, provided with spacers and locking rings.

For example, in the illustrated example, the lenses 441, 442 are held in a lens mount 444, or lens barrel. The lens mount 444 has a first end 444A designed to cooperate with an end of the housing 421, for example the first end 444A of the lens mount 444 penetrates in the housing 421 through the opening 421A. The lens 443 is held in another lens mount 445, or lens barrel, having an end designed to cooperate with a second end 444B of the lens mount 444. For example, the second end 444B of the lens mount 444 penetrates in the lens mount 445.

In an advantageous embodiment, illustrated in Figure 4C, the lens 443 closest to the outer window 402, has a truncated portion 443T. The truncated portion 443T is formed in a portion of the lens 443 which is closest to the inclined outer window 402, here the upper portion of the lens 443. The lens mount 445, which has the shape of the lens 443, has also a truncated portion 445T, here the upper portion of the lens mount 445. These truncations allow the inclined outer window 402 to be brought closer to the lens 443, and thus closer to the optical system 440 and to the infrared image sensor 420, thus limiting the vignetting phenomenon. The truncated portion 443T of the lens 443 is covered by the truncated mount portion 445T, thus protecting the lens truncation.

For example, the optical system 440 is designed to have a horizontal field of view typically comprised between around 20° and 50°. The vertical field of view is approximatively equal to the horizontal field of view divided by the sensor's aspect ratio.

The infrared camera module 400 further comprises an interface part 450. The interface part 450 is used to position the optical system 440, and thus the infrared image sensor 420, with respect to the mount 410 of the outer window 402.

It should be noted that, depending on the type of glazing 300, the tilt angle α and/or the dimensions of the hole 304 may vary. The interface part 450 can be available in a number of variants, so that the same type of detector and optics of the infrared image sensor 420 can be adapted to different types of glazing 300.

The interface part 450 is for example assembled to the lens mount 445, for example through threaded holes 446 in the mount 445, threaded holes 453 in the interface part 450 and screws 447 or equivalent capable of cooperating with the threaded holes.

It is contemplated that the lens mount 445, and possibly the lens mount 444, can be part of the interface part 450.

In one advantageous embodiment, the interface part 450 is covered, at least at its inner surface, with an absorbent coating in the sensor's spectral sensitivity range, such as black paint, or black anodized aluminum.

In one advantageous embodiment, all or part of the inner surface of the interface part 450 is structured to protect the sensor 420, for example the detector 422, from stray light, particularly sunlight. For example, the structuring 452 of the interface part 450 has the form of stair treads.

In one advantageous embodiment, the interface part 450 is thermally conductive, at least in an area exposed to the stray light, so as not to store the heat absorbed from the stray light. Indeed, if the exposed area is heated, it becomes a secondary source of stray radiation, through thermal emission from the interface part 450.

In one advantageous embodiment, the interface part 450 is coupled to another heat dissipation system 433, for example an inner portion 451 of the interface part 450 which is exposed to stray light, particularly sunlight, is coupled to the heat dissipation system 433. For example, the heat dissipation system 433 is a radiator, designed to evacuate the heat generated by the stray light absorbed by the interface part 450. For example, the heat dissipation system 433 comprises a plurality of fins 434, aligned in the longitudinal direction of the heat dissipation system 433. Advantageously, the heat dissipation system 433 may contribute in particular to the rigidity of the interface part 450.

In one embodiment, the interface part 450 includes a temperature sensor 454, the measurement of which may be transmitted to the image processing unit. In particular, the temperature measurement may be used to evaluate the image of thermal stray light flux emitted by the interface part 450, so that it can be subtracted from the scene image. For example, the image processing unit may determine the light flux essentially originating from the scene image, and correct it of the stray light flux.

Optionally, the interface part 450 may include additional optical elements. For example, the interface part 450 may include a mirror, designed to deflect the optical axis 401, for example when it is searched to limit the dimensions of the optical system 440, and/or of the camera module 400.

The camera module 400 may comprise a mechanical shutter 425 positioned at any position along the optical axis 401 between the vacuum sealing window 423 and the inner face 402A of the infrared outer window 402. The mechanical shutter 425 allows the optical path to be cut, for example to provide a black reference to the image processing unit for subtraction, for example to calibrate the image sensor 420. The mechanical shutter 425 may also protect the image sensor 420, for example when an intense source, such as the sun, appears in the scene S, or when the vehicle is parked.

The mechanical shutter 425 is preferably positioned close to the pupil 448 of the optical system 440, in order to provide a good reference image, independent of the shutter's spatial inhomogeneities, or at a position where the optical field is small, so as to reduce the size of the shutter 425, and thus lighten it.

The shutter 425 has, for example, the shape of a disk, and may be coated with an emissive coating on the sensor's side and a reflective coating on the scene side.

The shutter 425 can be tilted from an open position to a close position by means of a motor 426. The motor 426 may be advantageously connected to control and power supply electronics of the image sensor 420.

Other types of shutters may be encompassed by those skilled in the art, for example shutters made of a plurality of blades, or iris.

The outer window 402 comprises two faces, an inner face 402A and an outer face 402B.

The outer face 402B is preferably substantially planar, for example to be in line with the glazing 300 and to fit the tilt angle α of the glazing 300. The outer window 402 has its outer face 402B which is therefore inclined by a tilt angle θ. The tilt angle θ of the outer window 402 corresponds substantially to the tilt angle α of the glazing 300. The tilt angle θ is typically comprised between 20° and 65°, for example between 15° and 45° or between 45° and 65°.

The outer window 402 is preferably included in the volume freed by the hole 307 of the reception part 305 of the glazing 300. For example, the outer window 402 does not laterally protrude on either side of the hole 307.

For example, the outer window 402 is formed from a transparent material in the sensor's spectral sensitivity range, such as the examples of materials given for the lenses.

The outer face 402B of the infrared outer window 402 may advantageously be coated with a state-of-the-art anti-reflective coating suitable for outdoor environmental conditions.

By integrating the infrared outer window 402 within the camera module 400, there is a considerable freedom for designing the outer window 402, and in particular its geometry.

In one embodiment, the inner face 402A of the outer window 402 is substantially planar and parallel to the outer face 402B. The inner face 402A of the outer window 402 may be provided with a standard anti-reflective coating such as those used for other optical elements, but preferably different from the anti-reflective coating of the outer face 402B. If the inner face 402A of the outer window 402 is substantially planar and parallel to the outer face 402B, the quality of the optical system, for example the sharpness, is not or only slightly affected by the outer window 402.

The outer window 402 is hold by a window mount 410, which may be an opto-mechanical mount. The window mount 410 fits the side face 402C of the outer window 402. In particular, the window mount 410 has an inner surface 411 designed to fit the side face 402C of the outer window 402.

The window mount 410 interfaces on one hand with the interface part 450, and on the other hand with the reception part 305 of the glazing 300. Preferably, the window mount 410 has an outer surface 412 designed to slide into the through hole 307 of the receiving part 305, and another outer surface 413 designed to stop on the second portion 305B (shoulder portion) of the receiving part 305.

The window mount 410 is preferably dimensioned so that the outer face 402B of the outer window 402 substantially aligns with the outer face 300A of the glazing 300, such as an extension of the glazing 300.

The window mount 410 comprises fixing means 416 that may complement the fixing means 308 of the reception part 305.

The window mount 410 has typically a shape of a flange having a first portion 414 fitted between the side face 402C of the outer window 402 and the first portion 305A of the receiving part 305, and a second portion 415 attached to the interface part 450 and to the receiving part 305. The first portion 414 includes the inner surface 411 and the outer surface 412. The second portion 415 includes the outer surface 413. Those skilled in the part will be able to design the window mount 410 so as to interface with the interface part 450 and with the reception part 305 and to choose the appropriate fixing means.

The infrared camera module 400 comprises the entire optical chain, up to the infrared outer window 402, and this facilitates the production, assembly, calibration and qualification chain of the infrared camera module 400, since the entire chain can be completed before the assembly with the glazing 300.

The assembly of the infrared camera module 400, that is, the assembly of its different elements, can be carried out under controlled conditions, such as temperature, pressure, or particles conditions. For example, the assembly of the infrared camera module 400 can be carried out in a clean room or grey room, depending on the assembly stage. In addition, the sealing between the infrared outer window 402 and the interface part 450 can be controlled. Moreover, in an optical assembly chain, alignment tolerances of the optics with the outer window 402 may be improved, allowing for a smaller outer window 402. These favorable conditions improve the quality of the infrared camera module 400.

The focusing, in particular the sharpness adjustment, of the optics can be carried out in the presence of the outer window 402, that is with the entire optical chain. The focusing can be done, for example, using a thermal source, a test pattern and a collimator. For example, at least one optical element or group of optical elements is moved along a degree of freedom, such as a longitudinal sliding or a helical movement, until sharpness is optimized on the test pattern image. Once sharpness is achieved, the focus adjustment can be locked, for example by means of an ultraviolet (UV) flash on a glue that reticulates when exposed to UV light. From an industrial point of view, it is easier to adjust the infrared camera module 400 in the absence of the entire glazing 300.

The image processing unit has generally to be calibrated, for example in a so-called "intrinsic" calibration. Generally, the image processing unit first records reference images from uniform scenes, under controlled ambient temperature conditions. In particular, these reference images take into account the contributions of the stray light flux emitted by all the elements of the infrared camera module 400, which may be at different temperatures when thermal equilibrium is established.

To do this, the entire infrared camera module 400, including the outer window 402, may be placed in a climatic chamber which is positioned in order to face black bodies, that is, emissive reference surfaces with controlled and substantially uniform temperatures. A set of climatic chamber temperatures is recorded, representative of the ambient temperature range of a mission profile, that is, a qualified ambient operating temperature range, and a set of black bodies' temperatures representative of the scene temperature range of the mission profile is also recorded. It is also possible to simulate a variation in the temperature of the glazing 300, and therefore of the outer window 402 and its mount 410, by locally modifying the temperature of the outer window mount 410, either by an external tool in thermal contact with a thermostat.

The set of reference images may be used by the image processing unit, in order to be able to provide a good quality image correction, in which the fixed spatial noise relating to the response inhomogeneities of the detector 422, for example of the micro-bolometers, in the sensor 420, can be corrected, as well as the thermal stray light flux emitted by all the elements of the infrared camera module 400. From an industrial point of view, it is easier to calibrate the infrared camera module 400 in the absence of the glazing 300.

During focusing, intrinsic calibration and additional quality tests, it is possible to validate the quality of each infrared camera module, including the entire optical chain, before it is integrated into a glazing. As a corollary, defective infrared camera modules can be sorted out before integration into the glazing.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

## Claims

1. An infrared camera module (400) comprising:
- an infrared image sensor (420);
- an outer window (402), inclined with respect to an optical axis (401) of the infrared image sensor and held in a window mount (410) comprising a shape adapted to cooperate, in a removable manner, with a receiving part (305) surrounding a hole (304) passing through a glazing (300);
- an interface part (450) providing a mechanical link between the window mount (410) and the infrared image sensor (420).

2. Infrared camera module (400) according to claim 1, further comprising at least one focal optical element (441, 442, 443), such as one or more lenses, positioned inside the interface part (450) and centered with respect to the optical axis (401).

3. Infrared camera module (400) according to claim 2, wherein the at least one focal optical element comprises at least one lens (441, 442, 443) held in at least one lens mount (444, 445), the at least one lens mount being coupled to the interface part (450), or being part of the interface part.

4. Infrared camera module (400) according to claim 3, wherein the at least one lens (441, 442, 443):
- is formed from a germanium crystal, zinc sulfide or zinc selenide, or from an amorphous infrared chalcogenide glass or alloy; and/or
- is coated with an anti-reflective coating adapted to optimize optical transmission in the spectral sensitivity range of the infrared image sensor (420).

5. Infrared camera module (400) according to any of claims 1 to 4, wherein the infrared image sensor (420) comprises an array of vacuum micro-bolometers, sensitive, for example, to all or part of the wavelength range from 2.5 to 20 µm, and preferably from 7.5 to 14 µm.

6. Infrared camera module (400) according to any of claims 1 to 5, wherein the outer window (402) has an outer face (402B) which is substantially planar, the outer face of the outer window being for example coated with an anti-reflective coating.

7. Infrared camera module (400) according to any of claims 1 to 6, wherein the outer window (402) has a material which is transparent in the spectral sensitivity range of the infrared image sensor (420).

8. Infrared camera module (400) according to claim 6 or 7, wherein the outer window (402) has an inner face (402A) which is substantially planar and parallel to its outer face (402B), the inner face of the outer window being for example coated with an anti-reflective coating, preferably different from an anti-reflective coating of the outer face.

9. Infrared camera module (400) according to any of claims 1 to 8, wherein the window mount (410) comprises first means for interfacing with the interface part (450), and second means for interfacing with the reception part (305) of the glazing (300).

10. Infrared camera module (400) according to any of claims 1 to 9, wherein the window mount (410) has a first outer surface (412) designed to slide into the through hole (304) and a second outer surface (413) designed to stop on a shoulder portion (305B) of the receiving part (305), the shoulder portion being dimensioned so that an outer face (402B) of the outer window (402) substantially aligns with an outer face (300A) of the glazing (300), as an extension of the glazing.

11. Infrared camera module (400) according to any of claims 1 to 10, wherein an outer face (402B) of the outer window (402) is inclined with respect to the optical axis (401) of the infrared image sensor by a tilt angle (θ) comprised between 20° and 70°, for example between 15° and 45° or between 45° and 65°.

12. Infrared camera module (400) according to any of claims 1 to 11, further comprising a mechanical shutter (425) positioned along the optical axis (401) adapted to cut the optical path coming from the outer window (402) to the infrared image sensor (420).

13. Infrared camera module (400) according to any of claims 1 to 12, wherein the interface part (450):
- includes a temperature sensor (454); and/or
- includes a mirror designed to deflect the optical axis (401); and/or
- includes an internal structure (452) designed to protect the infrared image sensor (420) from stray light; and/or
- is covered with an absorbent coating in the spectral sensitivity range of the infrared image sensor (420), for example a black paint or a black anodized aluminum; and/or
- is thermally conductive, at least in an area of the interface part exposed to stray light; and/or
- is thermally coupled to a first heat dissipation system (433).

14. Infrared camera module (400) according to any of claims 1 to 13, wherein the infrared image sensor (420) is thermally coupled to a second heat dissipation system (431).

15. A method of assembling an infrared camera module (400), the method comprising:
- assembling an infrared image sensor (420) to an outer window (402), inclined with respect to an optical axis (401) of the infrared image sensor, by means of an interface part (450), the outer window being held in a window mount (410) comprising a shape adapted to cooperate, in a removable manner, with a receiving part (305) surrounding a hole (304) passing through a glazing (300), the interface part (450) providing a mechanical connection between the window mount (410) of the outer window (402) and the infrared image sensor (420).
